# FASCICULE DE BREVET EUROPEEN

(11) **EP 1 577 135 B1**
(45) Date de publication et mention de la délivrance du brevet: **23.07.2008**
(21) Numéro de dépôt: 05300183.0
(22) Date de dépôt: 15.03.2005
(51) Int. Cl.: B60J 1/20, B60J 7/00

(54) **Module de structure pour rideau escamotable et véhicule comportant un tel module**
Struktur für einziehbares Abdeckrollomodul und Fahrzeug mit einem derartigen Modul
Retractable roller blind module and vehicle comprising such a module

(30) Priorité: 17.03.2004 FR 0450539
(43) Date de publication de la demande: 21.09.2005
(73) Titulaire: Peugeot Citroën Automobiles, 78140 Vélizy-Villacoublay (FR)
(72) Inventeur: Pezeril, Stéphane, 92310 Sevres (FR)
(74) Mandataire: De Cuenca, Emmanuel Jaime

(56) Documents cités:
- DE-A- 10 063 150
- DE-A- 10 155 167

## Description

L'invention se rapporte à un module de structure pour un rideau escamotable de véhicule ainsi qu'à un véhicule comportant un tel module.

Certains véhicules sont équipés d'un rideau escamotable. En particulier, les véhicules comportant un toit en verre possèdent en général un tel rideau. De cette façon la surface vitrée peut être recouverte d'un rideau opaque selon les besoins.

En général le rideau est mis en mouvement par un moteur entre une position rangée dans un logement et une position déployée. Des moyens de guidage sont prévus pour mieux contrôler le déploiement du rideau.

Il est connu de EP1538012 des modules de pavillon composés de couches superposées formant le toit translucide, d'un moteur électrique situé à l' avant du toit destiné à l' entraînement d'un rideau logé à l'arrière du toit, le rideau étant apte à s'étendre entre les couches du toit formant aussi un moyen de guidage.

Habituellement ces véhicules comportent également une antenne sur le toit.

Ainsi, la multitude d'éléments qui doit être intégrée au niveau du toit occupe un volume important. Par conséquent, la surface du toit restant disponible pour un toit en verre est restreinte.

De plus, il y a souvent des éléments fonctionnels du toit qui sont difficilement accessibles lors d'une intervention de réparation. La réparation d'un élément fonctionnel peut donc nécessiter le démontage complet du mécanisme occultant.

Un but de la présente invention est de pallier tout ou partie des inconvénients de l'art antérieur relevés ci-dessus.

A cette fin, le module de structure selon l'invention, par ailleurs conforme à la définition générique qu'en donne le préambule ci-dessus, est essentiellement caractérisé en ce qu'il comprend une partie formant un logement pour le rideau escamotable en position rangée, et une partie formant un support pour un moteur d'actionnement du rideau, et la partie formant support pour le moteur étant positionnée à l'avant du logement dans la direction du déploiement du rideau.

Par ailleurs, l'invention peut comporter l'une ou plusieurs des caractéristiques suivantes .
- le logement pour le rideau est situé au niveau de l'extrémité arrière du module par rapport à la direction du déploiement du rideau,
- le module comprend des parois supérieures et inférieures, sensiblement parallèles au plan de déploiement du rideau et en ce que les parois supérieures et inférieures sont jointives à leurs extrémités arrières de façon à délimiter le logement,
- le module comporte des moyens de guidage pour le rideau,
- les moyens de guidage sont situés au niveau de la paroi supérieure,
- le support pour le moteur est situé au niveau de la paroi inférieure,
- le module comprend une portion formant un raidisseur entre le logement et la partie du module formant le support,
- le raidisseur comporte des moyens de fixation prévu pour accueillir une antenne.

Un autre but de l'invention est de proposer un véhicule comportant un rideau escamotable, un moteur d'actionnement du monté sur un support, et un logement pour le rideau escamotable en position rangée, caractérisé en ce que le logement et le support sont formés par un module selon l'invention de sorte que le moteur est situé à l'avant du logement dans la direction du déploiement du rideau.

Selon d'autres caractéristiques le véhicule peut comporter l'une ou plusieurs de caractéristiques suivantes :
- le rideau escamotable est un rideau enroulable,
- il comporte un toit caractérisé et en ce qu'au moins une partie du toit repose sur au moins une partie d'une face supérieure du module,
- le toit est constitué d'un matériau translucide,
- le module comporte des moyens de guidage.

D'autres particularités et avantages apparaîtront à la lecture de la description ci-après, faite en référence aux figures dans lesquelles :
- la figure 1 représente une vue en perspective d'un module de structure selon l'invention,
- la figure 2 représente une vue en perspective et schématique d'une partie d'un véhicule comprenant un module de structure selon l'invention.
- la figure 3 représente une vue schématique et en section selon la ligne AA d'un détail de la paroi inférieure du module de la figure 2.

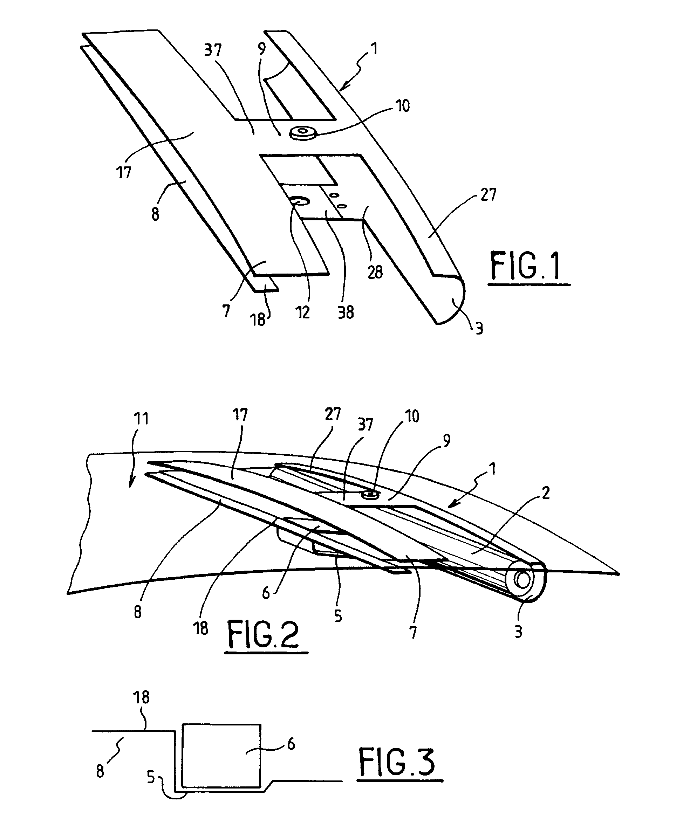

Les figures 1 et 2 représentent un module 1 de structure pour un rideau 2 escamotable de toit de véhicule. Le rideau 2 est représenté à la figure 2. Le module 1 comprend une paroi supérieure 7 et une paroi inférieure 8. Les deux parois sont sensiblement parallèles l'une par rapport à l'autre et parallèles au plan de déploiement du rideau 2.

En vue du dessus, chacune des parois supérieures 7 et inférieures 8 présente la forme générale d'un H. Les deux parois sont sensiblement symétriques par rapport au plan de déploiement du rideau 2, de façon à ne former qu'un seul H lorsque le module 1 est vu de dessus. C'est à dire que chacune des parois 7 et 8 est constituée de deux branches 17, 27, 18, 28 parallèles qui sont reliées par une entretoise centrale 37, 38. Les branches 17, 27, 18, 28 parallèles du H ont une longueur sensiblement égale à la largeur du toit du véhicule.

Une partie des branches 17, 27, 18, 28, appelées branches avant 17, 18 est située à l'avant de l'entretoise centrale 37, 38 par rapport au sens de déploiement du rideau. Les autres branches 27, 28, situées à l'arrière de l'entretoise centrale par rapport au sens de déploiement du rideau, sont appelées branches arrière 27, 28.

Les branches arrière 27, 28 du module sont jointives sur au moins une partie de leur longueur de façon à délimiter un logement 3 pour le rideau 2 escamotable en position rangée. Le module décrit à la figure 1 est particulièrement adapté pour accueillir un rideau enroulable tel que représenté à la figure 2.

Lors du déploiement, le rideau 2 passe entre les parois supérieures 7 et inférieures 8. Les branches avant 17, 18 du module 1 peuvent former un support pour accueillir des moyens de guidage tel que des rails (non représentés).

La branche avant 18 de la paroi inférieure 8 comprend une partie formant un support 5 pour un moteur 6 d'actionnement du rideau 2. Avantageusement, le support 5 est situé sensiblement dans la partie centrale de la branche avant 18 du module 1. Dans un mode de réalisation avantageux, la branche avant 18 de la paroi inférieure 8 est embouti de façon à former un logement pour le moteur.

Les figures 2 et 3 représentent un mode de réalisation avantageux dans lequel le logement pour le moteur 6 est réalisé de façon que le moteur 6 repose sur la face supérieure de la paroi inférieure. Ainsi, lors du déploiement du rideau 2, celui-ci passe au-dessus du moteur 6. Lorsque le moteur 6 est placé de cette façon, une ouverture, non-représentée dans les figures, peut être prévue dans le support 5 pour faciliter l'accès au moteur 6 lors de la maintenance du système. De préférence l'ouverture est située au niveau de la partie inférieure du support 5, directement au-dessous du moteur 6.

Dans un autre mode de réalisation, non-représenté, le support 5 est réalisé de façon à permettre le montage du moteur 6 au-dessous du module 1. Par exemple, le moteur 6 est fixé directement sur la face inférieure de la branche avant 18 du module 1.

Les parties du module 1 formant les entretoises centrales 37,38 du H sont situées sensiblement à mi-longueur des branches 17, 27, 18, 28. L'entretoise centrale 37 de la paroi supérieure 7 forme un raidisseur 9 entre le logement 3 et la branche avant 17 de la paroi supérieure 7. Dans un mode de réalisation, l'entretoise centrale 37 de la paroi supérieure 7 comporte également des moyens de fixation 10 prévu pour accueillir une antenne (cf. figure 2). Par exemple, les moyens de fixation 10 sont constitués d'un orifice dans l'entretoise centrale 37 supérieure. Avantageusement, l'entretoise centrale 38 de la paroi inférieure 8 comporte un orifice 12 coïncidant verticalement avec les moyens de fixation 10 de l'entretoise 37 supérieure. Cet orifice 12 permet un démontage facile de l'antenne lors d'une intervention de réparation.

Dans un mode de réalisation, au moins une partie du toit 11 du véhicule repose sur au moins une partie de la paroi supérieure 7 du module 1. Dans un mode avantageux, toute la superficie de la paroi supérieure 7 du module 1 sert de support pour un toit. Avantageusement, il s'agit d'un toit constitué d'un matériau translucide. Des matériaux appropriés sont par exemple du verre ou des matières plastiques.

L'agencement des composants du module tel que décrit préalablement, notamment le positionnement du moteur à l'avant du logement 3 du rideau 2 dans la direction du déploiement, permet d'optimiser le volume occupé par ces éléments de structure. En particulier le montage de l'antenne entre le logement 3 du rideau 2 et le support 5 pour le moteur 6 permet d'agencer un grand nombre de fonctionnalités dans un minimum d'espace. De cette façon le module 1 permet de réduire le volume du mécanisme de toit occultable par rapport à l'art antérieur. Ainsi, la proportion de la surface découvrable du toit et plus importante que dans les systèmes connus. L'invention permet donc d'obtenir une plus grande ouverture au niveau du toit du véhicule.

## Revendications

1. Module (1) de structure pour rideau escamotable de véhicule **caractérisé en ce qu'**il comprend une partie formant un logement (3) pour le rideau escamotable en position rangée, une partie comportant des moyens de guidage pour le rideau, et une partie formant un support (5) pour un moteur (6) d'actionnement du rideau, et la partie formant support (5) pour le moteur (6) étant positionnée à l'avant du logement (3) dans la direction du déploiement du rideau, ledit module supportant une partie d'un toit en verre sur au moins une partie de la paroi supérieure (7) du module (1).

2. Module (1) selon la revendication 1 **caractérisé en ce que** le logement (3) pour le rideau (2) est situé au niveau de l'extrémité arrière du module (1) par rapport à la direction du déploiement du rideau (2).

3. Module (1) selon l'une quelconque des revendications 1 ou 2 **caractérisé en ce que** le module (1) comprend des parois supérieures (7) et inférieures (8), sensiblement parallèles au plan de déploiement du rideau (2) et **en ce que** les parois supérieures (7) et inférieures (8) sont jointives à leurs extrémités arrières de façon à délimiter le logement (3).

4. Module (1) selon l'une quelconque des revendications 1 à 3 **caractérisé en ce qu'**il comporte des moyens de guidage pour

5. Module (1) selon la revendication 4 **caractérisé en ce que** les moyens de guidage sont situés au niveau de la paroi supérieure (7) .

6. Module selon l'une quelconque des revendications 3 à 5 **caractérisé en ce que** le support (5) pour le moteur (6) est situé au niveau de la paroi inférieure (8).

7. Module selon l'une quelconque des revendications 1 à 5 **caractérisé en ce que** le module (1) comprend une portion formant un raidisseur (9) entre le logement (3) et la partie du module (1) formant le support (5).

8. Module selon la revendication 7 **caractérisé en ce que** le raidisseur (9) comporte des moyens de fixation (10) prévu pour accueillir une antenne.

9. Véhicule comportant un rideau escamotable (2), un moteur (6) d'actionnement du monté sur un support (5), et un logement (3) pour le rideau (2) escamotable en position rangée, **caractérisé en ce que** le logement (3) et le support (5) sont formés par un module (1) conforme à l'une quelconque des revendications précédentes de sorte que le moteur (6) est situé à l'avant du logement (3) dans la direction du déploiement du rideau (2).

10. Véhicule selon la revendication 8 **caractérisé en ce que** le rideau escamotable (2) est un rideau enroulable.

11. Véhicule selon l'une quelconque des revendications 8 ou 9 **caractérisé en ce qu'**il comporte un toit (11) **caractérisé** et **en ce qu'**au moins une partie du toit (11) repose sur au moins une partie d'une face supérieure (7) du module (1).

12. Véhicule selon la revendication 10 **caractérisé en ce que** le toit (11) est constitué d'un matériau translucide.

13. Véhicule selon l'une quelconque des revendications 9 à 12 **caractérisé en ce que** le module (1) comporte des moyens de guidage.

## Claims

1. Structural module (1) for a retractable blind for a vehicle, **characterized in that** it comprises a part that forms a housing (3) for the retractable blind when it is stored away, a part having guidance means for the blind and a part that forms a support (5) for an actuator motor (6) for the blind, the part that forms a support (5) for the motor (6) being positioned in front of the housing (3) in the direction in which the blind is deployed, the said module supporting part of a glass roof on at least part of the upper wall (7) of the module (1).

2. Module (1) according to Claim 1, **characterized in that** the housing (3) for the blind (2) is located at the rear end of the module (1) in relation to the direction in which the blind (2) is deployed.

3. Module (1) according to either of Claims 1 and 2, **characterized in that** the module (1) comprises upper (7) and lower (8) walls substantially parallel to the deployment plane of the blind (2) and **in that** the upper (7) and lower (8) walls meet at their rear ends so as to define the housing (3).

4. Module (1) according to any one of Claims 1 to 3, **characterized in that** it has guidance means for the blind (2).

5. Module (1) according to Claim 4, **characterized in that** the guidance means are located at the upper wall (7).

6. Module according to any one of Claims 3 to 5, **characterized in that** the support (5) for the motor (6) is located at the lower wall (8).

7. Module according to any one of Claims 1 to 5, **characterized in that** the module (1) comprises a portion that forms a stiffener (9) between the housing (3) and the part of the module (1) that forms the support (5).

8. Module according to Claim 7, **characterized in that** the stiffener (9) has mounting means (10) for receiving an antenna.

9. Vehicle having a retractable blind (2), an actuator motor (6) for the blind mounted on a support (5) and a housing (3) for the retractable blind (2) when it is stored away, **characterized in that** the housing (3) and the support (5) are formed by a module (1) according to any one of the preceding claims such that the motor (6) is located in front of the housing (3) in the direction in which the blind (2) is deployed.

10. Vehicle according to Claim 8, **characterized in that** the retractable blind (2) is a roller blind.

11. Vehicle according to either of Claims 8 and 9, **characterized in that** it has a roof (11) **characterized in that** at least part of the roof (11) rests on at least part of an upper face (7) of the module (1) .

12. Vehicle according to Claim 10, **characterized in that** the roof (11) is made of a translucent material.

13. Vehicle according to any one of Claims 9 to 12, **characterized in that** the module (1) has guidance means.

## Patentansprüche

1. Strukturmodul (1) für einziehbares Fahrzeugrollo, **dadurch gekennzeichnet, dass** es einen Teil aufweist, der eine Aufnahme (3) für das einziehbare Rollo in verstauter Position bildet, einen Teil, der Führungsmittel für das Rollo aufweist, und einen Teil, der einen Träger (5) für einen Betätigungsmotor (6) des Rollos bildet, wobei der Teil, der den Träger (5) für den Motor (6) bildet, an der Vorderseite der Aufnahme (3) in die Richtung des Aufbreitens des Rollos positioniert ist, wobei das Modul einen Teil eines Dachs aus Glas auf mindestens einem Teil der oberen Wand (7) des Moduls (1) stützt.

2. Modul (1) nach Anspruch 1, **dadurch gekennzeichnet, dass** die Aufnahme (3) für das Rollo (2) auf dem Niveau des hinteren Endes des Moduls (1) in Bezug zu der Aufbreitrichtung des Rollos (2) liegt.

3. Modul (1) nach einem der Ansprüche 1 oder 2, **dadurch gekennzeichnet, dass** das Modul (1) eine obere (7) und eine untere (8) Wand aufweist, die im Wesentlichen zu der Aufbreitebene des Rollos (2) parallel sind, und dass die obere Wand (7) und die untere Wand (8) an ihren hinteren Enden so nebeneinander liegen, dass sie die Aufnahme (3) abgrenzen.

4. Modul (1) nach einem der Ansprüche 1 bis 3, **dadurch gekennzeichnet, dass** es Führungsmittel für das Rollo (2) aufweist.

5. Modul (1) nach Anspruch 4, **dadurch gekennzeichnet, dass** die Führungsmittel auf dem Niveau der oberen Wand (7) liegen.

6. Modul nach einem der Ansprüche 3 bis 5, **dadurch gekennzeichnet, dass** der Träger (5) für den Motor (6) auf dem Niveau der unteren Wand (8) liegt.

7. Modul nach einem der Ansprüche 1 bis 5, **dadurch gekennzeichnet, dass** das Modul (1) einen Abschnitt aufweist, der einen Versteifer (9) zwischen der Aufnahme (3) und dem Teil des Moduls (1), der den Träger (5) bildet, aufweist.

8. Modul nach Anspruch 7, **dadurch gekennzeichnet, dass** der Versteifer (9) Befestigungsmittel (10) aufweist, die zum Aufnehmen einer Antenne vorgesehen sind.

9. Fahrzeug mit einem einziehbaren Rollo (2), einem Betätigungsmotor (6) des Rollos, der auf einen Träger (5) montiert ist, und einer Aufnahme (3) für das einziehbare Rollo (2) in verstauter Position, **dadurch gekennzeichnet, dass** die Aufnahme (3) und der Träger (5) aus einem Modul (1) gemäß einem der vorhergehenden Ansprüche derart ausgebildet sind, dass sich der Motor (6) auf der Vorderseite der Aufnahme (3) in die Aufbreitrichtung des Rollos (2) befindet.

10. Fahrzeug nach Anspruch 8, **dadurch gekennzeichnet, dass** das einziehbare Rollo (2) ein aufrollbares Rollo ist.

11. Fahrzeug nach einem der Ansprüche 8 oder 9, **dadurch gekennzeichnet, dass** es ein Dach (11) aufweist und dass mindestens ein Teil des Dachs (11) auf mindestens einem Teil einer oberen Seite (7) des Moduls (1) ruht.

12. Fahrzeug nach Anspruch 10, **dadurch gekennzeichnet, dass** das Dach (11) aus einem durchscheinenden Material besteht.

13. Fahrzeug nach einem der Ansprüche 9 bis 12, **dadurch gekennzeichnet, dass** das Modul (1) Führungsmittel aufweist.
